(19) Europäisches Patentamt
European Patent Office
Office européen des brevets

(11) **EP 3 252 413 B1**

(12) **EUROPÄISCHE PATENTSCHRIFT**

(45) Veröffentlichungstag und Bekanntmachung des Hinweises auf die Patenterteilung:
**09.12.2020  Patentblatt 2020/50**

(51) Int Cl.:
*F27D 15/02* (2006.01)          *F26B 17/26* (2006.01)
*B65G 25/06* (2006.01)

(21) Anmeldenummer: **17178000.0**

(22) Anmeldetag: **08.04.2008**

(54) **VERFAHREN UND EINRICHTUNG ZUM KÜHLEN EINER AUF EINEM FÖRDERROST LIEGENDEN SCHÜTTGUTSCHICHT**

METHOD AND DEVICE FOR COOLING A BULK GOOD LAYER ON A SUPPLY GRID

PROCÉDÉ ET DISPOSITIF DESTINÉS À REFROIDIR UNE COUCHE DE PRODUITS EN VRAC SE TROUVANT SUR UNE GRILLE DE TRANSPORT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.04.2007   DE 102007019530**

(43) Veröffentlichungstag der Anmeldung:
**06.12.2017   Patentblatt 2017/49**

(62) Dokumentnummer(n) der früheren Anmeldung(en) nach Art. 76 EPÜ:
**08154202.9 / 1 992 897**

(73) Patentinhaber: **Alite GmbH**
**31535 Neustadt (DE)**

(72) Erfinder: **von Wedel, Karl**
**31535 Neustadt (DE)**

(74) Vertreter: **Lohr, Jöstingmeier & Partner**
**Junkersstraße 3**
**82178 Puchheim/München (DE)**

(56) Entgegenhaltungen:
**EP-A- 0 167 658     EP-A- 1 475 594**
**US-A- 5 901 460**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die Erfindung betrifft ein Verfahren und eine Einrichtung zum Kühlen einer auf einem Förderrost liegenden Schüttgutschicht mittels durch den Rostboden ausgeblasener Kühlluft, wobei der Rostboden aus mehreren quer zur Förderrichtung nebeneinander angeordneten, relativ zueinander längs bewegten Planken mit dazwischen liegenden, einen Kühlluftdurchtritt erlaubenden Bewegungsspalten gebildet ist.

### Stand der Technik

Förderroste der oben beschriebenen Art sind in verschiedenen Ausführungen verwirklicht worden. Dabei werden die Planken mit dem darauf lagernden Schüttgut einzeln oder gruppenweise entsprechend einem bestimmten Bewegungsmuster vor und zurück bewegt derart, dass sich eine Netto-Vorwärtsbewegung des Schüttgutes in Förderrichtung einstellt. Die Kühlung des Schüttgutes erfolgt im allgemeinen über in den Planken ausgebildete Ausblasöffnungen, über die in unterhalb des Rostbodens angeordneten Kühlluftkanälen oder offenen Kammern zugeführte Kühlluft in das darüber befindliche Schüttgut geblasen wird.

Ein besonderes konstruktives Problem stellen die Bewegungsspalte zwischen den zueinander bewegten Planken dar, die so ausgestaltet werden müssen, dass ein Rostdurchfall durch diese hindurch vermieden wird.

Aus der EP 1 475 594 A1 ist bereits ein Förderrost der oben genannten Art bekannt, bei welchem unterhalb der Bewegungsspalte jeweils eine Rinne angeordnet ist, die durch den Bewegungsspalt hindurchfallendes Schüttgut auffängt. Die Seitenwände der Rinne bilden mit an der Unterseite einer jeden Planke angeordneten vertikalen Leisten bzw. Seitenwangen ein enges Labyrinth, durch das kein Schüttgut hindurchtreten kann, so dass ein Rostdurchfall in die unter dem Rostboden angeordnete Kammer verhindert wird. Ziel dieser konstruktiven Maßnahme ist, den Bewegungsspalt zwischen benachbarten Planken einerseits gegen Rostdurchfall von oben nach unten und andererseits gegen Gasdurchtritt von unten nach oben abzudichten (S. 3, Z. 25ff.).

Nachteilig bei der bekannten Konstruktion ist, dass die Bewegungsspalte wegen der darin ausgebildeten Labyrinthstrukturen verhältnismäßig breit sind, so dass sich über diesen unbelüftete und am Förderprozess nicht teilnehmende Schüttgutbahnen bilden, wodurch der Förderwirkungsgrad des Förderrostes verschlechtert wird. Um ein akzeptables Verhältnis von fördernden zu nicht fördernden Rostbodenflächen zu erreichen, müssen die Planken ebenfalls verhältnismäßig breit ausgeführt werden. Nach dem Abstellen der Förderbewegungen bleibt Schüttgut etwa dachförmig auf den Planken liegen. Dabei richtet sich die Schüttgutmenge nach der Dachhöhe, und diese richtet sich unter Berücksichtigung der vorgegebenen Böschungswinkel des Schüttgutes nach der Breite der Planken. D.h. je breiter die Planken sind, umso größer ist die auf diesen zurück bleibende Schüttgutmenge. Insgesamt ist diese nach dem Entleeren des Förderrostes auf den Planken einerseits und über den Bewegungsspalten andererseits zurück gebliebene Menge an Schüttgut groß, und sie muss vor Inspektionen und Reparaturen manuell oder durch gesonderte Werkzeuge vom Rostboden entfernt werden. Ein weiterer Nachteil des bekannten Förderrostes wird darin gesehen, dass sich infolge der Reibung zwischen dem in die Bewegungsspalte fallenden Schüttgut und den Flächen der Labyrinthe die erforderliche Antriebsleistung beträchtlich erhöht. In der Praxis hat sich wegen des oben beschriebenen Zusammenhanges zwischen der Breite der Dichtungen und der Breite der Planken ein Zwang zu einem Betrieb mit besonders hohen Schüttgutschichten ergeben, die entsprechend hohe Antriebs- und Belüftungsleistungen erforderlich machen.

Die dänische Patentschrift DK 1 999 014 03 zeigt einen Förderrost der eingangs genannten Art, bei welchem auch die Bewegungsspalte einen Kühlluftdurchtritt erlauben. Auch in diesem Fall sind in den breiten Bewegungsspalten Labyrinthstrukturen vorgesehen, die einen Durchfall von Schüttgut in die unter dem Rostboden angeordnete Kammer verhindern sollen. Diese Labyrinthstrukturen sind durch zwei ineinander greifende Winkelprofile gebildet derart, dass der Verlauf des Bewegungsspaltes in einem Querschnitt etwa mäanderförmig ist. Wie sich für einen Fachmann auf diesem Gebiet ohne weiteres erkennen lässt, wird auch hier zumindest der grobkörnige Anteil des Schüttgutes in den Bewegungsspalt bis zu der durch das untere Winkelprofil gebildeten Rinne fallen und erst durch den anschließenden, vertikal nach oben führenden Abschnitt des Labyrinthverlaufes an einem Durchfallen in die unter dem Rostboden befindliche Kammer gehindert. Nur der feine Staubanteil des Schüttgutes wird durch den durch das grobkörnige Schüttgut noch hindurch tretenden Luftstrom nach oben ausgetragen. Folgerichtig wird in der oben genannten Druckschrift auf S. 2, Z. 24 ausgesagt, dass die beiden Dichtungsteile eine "Staubdichtung" bilden. Wegen der nicht genau definierten Art und Menge des im Bewegungsspalt befindlichen Schüttgutes bleibt die Belüftung durch die Bewegungsspalte unkontrolliert und unbestimmt. Die in der dänischen Patentschrift beschriebene Konstruktion entspricht im Übrigen in funktionaler Hinsicht im Wesentlichen der Konstruktion der EP 1 475 594 A1 und hat damit auch die im Zusammenhang mit dieser Druckschrift beschriebenen Nachteile insbesondere im Hinblick auf die hohen Antriebs- und Belüftungsleistungen.

### Darstellung der Erfindung

Der Erfindung liegt die Aufgabe zugrunde, einen konstruktiv, herstellungstechnisch und montagetechnisch einfachen Förderrost der im Oberbegriff des Anspruches 1 genannten Art zu schaffen, der es ermöglicht, die Bewegungsspalte eng und damit auch die Planken gegenüber den bekannten Lösungen gemäß dem Stand der Technik schmal auszubilden, so dass die Menge des nicht an der Förderung teilnehmenden sowie des nach dem Entleeren des Förderrostes liegen bleibenden Schüttgutes möglichst gering ist und damit der Entleerungsgrad verbessert wird.

Eine weitere Aufgabe der Erfindung ist es, ein Verfahren der im Oberbegriff des Anspruches 12 genannten Art so weiter zu verbessern, dass Reibungsverluste im Bewegungsspalt vermieden und damit der Antriebswirkungsgrad verbessert wird.

Der Erfindung liegt die Erkenntnis zugrunde, dass die beispielsweise aus EP-A-0 167 658 und EP 0 549 816 B2 bekannte Ausgestaltung von zwischen profilierten Lamellen gebildeten, durchfallsicheren Ausblasschlitzen auch mit Vorteil für die Gestaltung von Bewegungsspalten zwischen zueinander bewegten Planken verwendet werden kann.

Die Erfindung geht demnach einerseits aus von einem Förderrost zum Fördern und Kühlen von Schüttgut, umfassend einen Rostboden mit mehreren quer zur Förderrichtung nebeneinander auf zugeordneten Tragstrukturen angeordneten, relativ zueinander einzeln oder in Gruppen betriebsmäßig längs bewegten Planken mit dazwischen liegenden, einen Kühlluftdurchtritt erlaubenden Bewegungsspalten. Dabei ist erfindungsgemäß vorgesehen, dass die einander zugewandten Seitenkanten bzw. Seitenkantenbereiche zweier zueinander längs bewegter Planken zwei zueinander komplementäre Profile bilden, zwischen denen ein enger Bewegungsspalt gebildet ist.

Durch eine entsprechende Profilierung der jeweiligen Seitenkanten bzw. Seitenkantenbereiche lassen sich in einfacher Weise auch komplizierte, komplementär ineinandergreifende Spaltprofile herstellen. Die Planken werden beispielsweise durch präzise Gieß- oder Ziehverfahren hergestellt. Bei der Montage der Planken auf den zugeordneten Tragstrukturen werden in einfacher Weise gleichzeitig und ohne zusätzlichen Montageaufwand die Bewegungsspalte gebildet, die mehr oder weniger beliebig eng ausgebildet sein können, so dass gröberes Korn schon mechanisch ferngehalten wird.

Durch eine geeignete Formgebung der Bewegungsspalte lässt sich zudem erreichen, dass diese auch im stationären Betrieb, d.h. in einer Betriebsphase ohne Luftausblasung, einen Rostdurchfall auch mit feinerer Kornstruktur verhindern. Zu diesem Zweck ist gemäß einer bevorzugten Ausgestaltung der Erfindung vorgesehen, dass die Bewegungsspalte jeweils siphonartig gekrümmt mit zumindest einem aufwärts gerichteten Eintrittsabschnitt, einem daran anschließenden abwärts gerichteten Zwischenabschnitt und einem daran anschließenden, aufwärts gerichteten Austrittsabschnitt ausgebildet sind. Der für die Kühlluft abwärts gerichtete Zwischenabschnitt bildet für eventuell in den Bewegungsspalt eindringende Schüttgutkörner einen aufwärts gerichteten Abschnitt, der ein wirksames Hindernis gegen Rostdurchfall bildet.

In weiterer Ausgestaltung der Erfindung ist vorgesehen, dass die Bewegungsspalte in einem spitzen Winkel schräg zur Rostbodenoberfläche austreten. Der Luftaustritt aus einem schräg aufwärts geführten Spalt stellt bei gleicher Ausströmgeschwindigkeit ein wirksameres Hindernis gegen Eindringen von Schüttgut dar als ein lotrechter Spalt, der ausschließlich durch ausgeblasene Kühlluft gegen Eindringen von Schüttgut geschützt wird.

Vorzugsweise ist der Austrittswinkel der Bewegungsspalte so gewählt, dass sich die austretende Kühlluft infolge des Coanda-Effektes an die Rostbodenoberfläche anlegt. Die horizontal an der Rostbodenoberfläche anliegende Kühlluft hält wirkungsvoll insbesondere in den Zwickeln der Schüttung durch Luftströmung bewegbares Feinkorn von dem Bewegungsspalt fern.

Um zu verhindern, dass insbesondere der Feinkornanteil des Schüttgutes zum Rostbodenrand hin wandert, ist gemäß einer weiteren Ausgestaltung der Erfindung vorgesehen, dass die Ausblasrichtung der Bewegungsspalte jeweils vom Rostbodenrand zur Rostbodenmitte hin verläuft.

Die Breite der Bewegungsspalte ist vorzugsweise so gewählt und mit der Breite der Planken abgestimmt, dass sie sich bei einer Wärmedehnung der Planken in Querrichtung jedenfalls nicht schließen und dass die mögliche Verengung durch eine entsprechende, vorzugsweise automatische Leistungserhöhung der Kühlluftventilatoren kompensierbar ist. Die Leistung der Kühlluftventilatoren wird demnach in jeder Betriebsphase so eingestellt, dass sich der für die Kühlluftausblasung durch die Bewegungsspalte gewünschte Kühlluftanteil einstellt.

Für die konstruktive Ausbildung der Tragstruktur sind unterschiedliche Lösungen denkbar. Gemäß einer Ausgestaltung sind die Planken jeweils auf diese auf ihrer ganzen Länge unterstützenden Längsträgern befestigt, die die zweite Ebene unterhalb der Planken bilden. Das bedeutet, dass eine der Anzahl der Planken entsprechende Anzahl von Längsträgern vorgesehen ist, die ihrerseits beweglich oder fest auf quer zur Förderrichtung angeordneten Querträgern gelagert sein können.

Um zu verhindern, dass die die Planken abstützende Tragstruktur sich übermäßig erwärmt, sind gemäß einer weiteren Ausgestaltung der Erfindung die Planken über wärmeisolierende Isolierelemente mit den diese unterstützenden Tragstrukturen verbunden.

Eine andere konstruktive Ausgestaltung der Tragstruktur sieht vor, dass die Planken auf mehreren in Längsrichtung hintereinander angeordneten Querträgern gelagert sind, die die zweite Ebene bilden. Eine derartige Konstruktion erlaubt es, die Anzahl der Träger in der zweiten Ebene kleiner zu halten als die Anzahl der Planken. Sie ermöglicht außerdem einen besseren Zugang zu der Rostunterseite beispielsweise zu Wartungs- oder Reparaturzwecken.

Die Planken selbst können einstückig ausgebildet sein und sich über die gesamte Länge des Rostbodens erstrecken. In bevorzugter Ausgestaltung sind jedoch die Planken aus mehreren in Längsrichtung hintereinander angeordneten und miteinander verbundenen Plankenabschnitten zusammengesetzt. Diese Ausgestaltung erlaubt es, die Rostbodenlänge entsprechend dem Rastermaß der Plankenabschnitte beliebig zu gestalten. Dabei sollen die Plankenabschnitte vorzugsweise über von unten nach oben schräg nach vorne ausgerichtete Stoßfugen aneinander stoßen. Bei einer Längung der Plankenabschnitte infolge Wärmedehnung verschiebt sich der jeweils hintere Plankenabschnitt gegenüber dem vorderen Plankenabschnitt nach vorne und oben und bildet eine kleine Stufe, die die Mitnahme des Fördergutes durch die Planke unterstützt.

Die Abmessungen der Bewegungsspalte sind auf die Abdichtfunktion einerseits und die Kühlfunktion andererseits exakt abgestimmt und bleiben auch während einer längeren Betriebszeit des Förderrostes weitgehend unverändert. Um eine Veränderung der Spaltgeometrie infolge eines Verschleißes bei der Lagerung der bewegten Planken auszuschließen, ist gemäß einer weiteren Ausgestaltung der Erfindung vorgesehen, dass die die Planken unterstützenden beweglichen Tragstrukturen mittels verschleißfreier Linearführungen nach dem bekannten Prinzip der Pendelfederstäbe (DE 10 118 440) gelagert sind.

Die Erfindung geht andererseits aus von einem Verfahren zum Kühlen einer auf einem Förderrost liegenden Schüttgutschicht mittels durch den Rostboden ausgeblasener Kühlluft, wobei der Rostboden aus mehreren quer zur Förderrichtung nebeneinander angeordneten, relativ zueinander längs bewegten Planken mit dazwischen liegenden Bewegungsspalten gebildet ist, und wobei Kühlluft durch die Bewegungsspalte austreten kann. Dabei ist erfindungsgemäß vorgesehen, dass eine definierte, durch den von Schüttgut freien Spaltquerschnitt und die Druckdifferenz über den Spalt genau bestimmbare Kühlluftmenge ausgeblasen wird, die zumindest ausreicht, die Bewegungsspalte vollständig frei zu blasen. Dadurch, dass die Bewegungsspalte eng gestaltet werden können, bilden diese für gröberes Schüttgut, d.h. für Schüttgut mit einer Korngröße, die über der Spaltweite liegt, per se ein absolutes Durchfallhindernis. Feineres Schüttgut, das in die Bewegungsspalte gelangen kann, kann mittels einer entsprechend bemessenen, durch die Bewegungsspalte geführten Kühlluftmenge ohne weiteres vollständig ausgeblasen werden, so dass eine vollkommene Abdichtung gegen Rostdurchfall erreicht wird. Da in einem von Schüttgut freien Bewegungsspalt keine die Plankenbewegung behindernde Reibung stattfindet, kann auch die Antriebsleistung gegenüber den bekannten Lösungen verringert werden. Da sämtliche Belüftungsspalte zugleich Bewegungsspalte sind, findet eine ständige Reinhaltung derselben statt.

Gemäß einer bevorzugten Ausgestaltung des erfindungsgemäßen Verfahrens ist weiter vorgesehen, dass zumindest ein überwiegender Anteil der gesamten Kühlluft durch die Bewegungsspalte ausgeblasen wird. Ein Verfahren mit Kühlluftaustritt durch die Bewegungsspalte ist in der bereits weiter vorne genannten dänischen Patentschrift DK 1 999 014 03 beschrieben worden. Bei diesem bekannten Verfahren wird jedoch davon ausgegangen, dass zumindest gröberes Schüttgut in die Bewegungsspalte gelangt, so dass nur eine nicht genau definierte Kühlluftmenge, die ausreicht, einen Staubanteil des Schüttgutes frei zu blasen, durch den mit grobkörnigem Schüttgut gefüllten Bewegungsspalt hindurch treten kann. Der größere Anteil der Kühlluft wird durch in den Planken ausgebildete Öffnungen ausgeblasen.

Gemäß der vorliegenden Erfindung ist dagegen vorgesehen, dass zumindest ein überwiegender Anteil der Kühlluft durch die Bewegungsspalte ausgeblasen wird derart, dass diese vollständig freigeblasen werden. Der gegebenenfalls restliche Anteil der Kühlluft kann beispielsweise durch in den Planken ausgebildete, quer zur Förderrichtung verlaufende Blasschlitze etwa entsprechend der vorne genannten EP-A-0 176 658 oder EP 0 549 816 B2 oder andere geeignete durchfallsichere Öffnungen ausgeblasen werden. Der überwiegende Anteil der Kühlluft kann im Grenzfall bis zum gesamten Anteil werden, wobei dann zusätzliche Blasöffnungen in den Planken entfallen. Ein besonderer Vorteil der hindernisfrei über die Bewegungsspalte ausgeblasenen Kühlluft wird darin gesehen, dass dabei der Rostwiderstand für die Kühlluft stets gleich und der Luftstrom definiert bleibt. Rostdurchfall wird sicherer verhindert als mittels mit Schüttgut angefüllter Labyrinthe.

Karl von Wedel (Zeitschrift "Zement, Kalk, Gips" 4/1992, S. 171 ff.) hat gezeigt, dass bei Verwendung von Coanda-Ausblasöffnungen eine sogenannte offene Rostfläche von 2,5 % der gesamten Rostfläche sinnvoll ist und zu optimalen Ergebnissen hinsichtlich der Luftverteilung bei hohem Schüttgutbett führt. Für den Grenzfall, dass technisch der gesamte oder nahezu gesamte Anteil der Kühlluft durch die Bewegungsspalte ausgeblasen wird, ergibt sich demnach konstruktiv ein Verhältnis der Breite der Bewegungsspalte zur Plankenbreite von 2,5 : 100, oder bei einer projektierten Plankenbreite von 75 mm eine Bewegungsspaltbreite von etwa 2 mm.

Die durch die Bewegungsspalte geführte Kühlluft wird vorzugsweise in einem spitzen Winkel schräg zur Rostbodenoberfläche ausgeblasen, und zwar vorzugsweise jeweils vom Rand des Rostbodens zur Rostbodenmitte hin, wie bereits dargelegt wurde

## Beschreibung der Zeichnungen

Die Erfindung wird im Folgenden anhand der beiliegenden Zeichnungen an einigen Ausführungsformen näher erläutert. Darin zeigt:

Figur 1     schematisch einen Teil-Querschnitt durch einen herkömmlichen Rostboden;

Figur 2     schematisch einen Teil-Querschnitt durch einen Rostboden gemäß der vorliegenden Erfindung;

Figur 3     eine perspektivische Ansicht mehrerer nebeneinander angeordneter Planken eines Rostbodens;

Figur 4     einen Teil-Querschnitt durch einen Förderrost, bei welchem jede Planke auf einem zugeordneten Längsträger befestigt ist;

Figur 5     einen Teil-Längsschnitt durch eine Anordnung gemäß Fig. 4 entlang der Schnittlinie V-V;

Figur 6     schematisch einen Querschnitt durch einen Rostboden;

Figur 7     in einer perspektivischen Teil-Darstellung als Kästen mit Querschlitzen ausgebildete Planken.

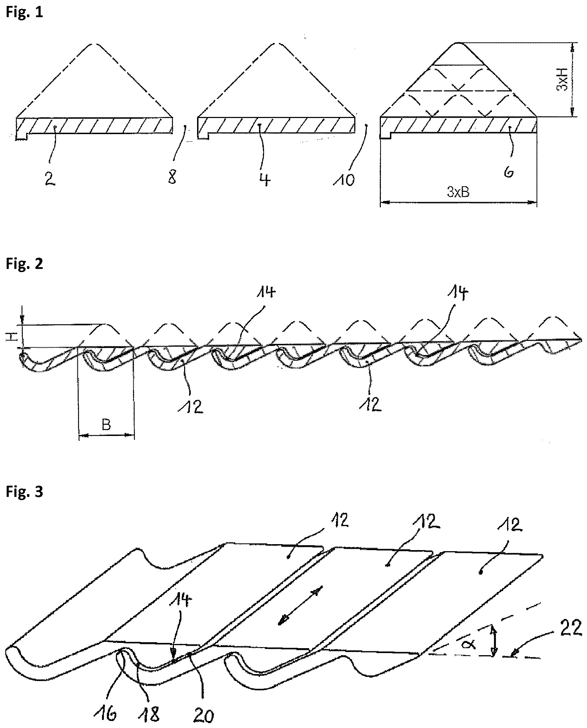

Fig. 1 zeigt schematisch drei nebeneinander angeordnete Planken 2, 4, 6 eines herkömmlichen Förderrostes mit dazwischen angeordneten Bewegungsspalten 8, 10. Die Bewegungsspalte 8, 10 sind verhältnismäßig breit ausgeführt, um in ihnen die in der Figur aus Gründen der besseren Übersichtlichkeit nicht dargestellten Labyrinthstrukturen unterzubringen, die einen Durchfall von Schüttgut in eine unterhalb der Planken 2, 4, 6 befindliche Kammer zu verhindern. Wie weiter vorne ausgeführt wurde, füllen sich die Bewegungsspalte 8, 10 mit Schüttgut. Die Fläche über den Bewegungsspalten 8, 10 nimmt an der Belüftung nicht teil. Um ein bestimmtes, erwünschtes Verhältnis der an der Belüftung teilnehmenden Fläche der Planken zu der an der Belüftung nicht teilnehmenden Fläche der Bewegungsspalte zu erreichen, müssen die Planken 2, 4, 6 verhältnismäßig breit ausgeführt werden. Wie weiter vorne bereits erläutert wurde, wird eine offene Rostfläche von beispielsweise 2,5 % der Gesamt-Rostfläche angestrebt, wobei sich bei dem in Fig. 1 dargestellten herkömmlichen Rost die Ausblasöffnungen auf die Plankenfläche verteilen muss, da die Bewegungsspalte als Ausblasöffnungen nicht zur Verfügung stehen. Wie die Fig. 1 erkennen lässt, verbleiben nach dem Stillsetzen des Förderrostes auf den Planken 2, 4, 6 Schüttgutkegel, deren Höhe einerseits von der jeweiligen Kegelfußbreite und andererseits von dem natürlichen Böschungswinkel des Schüttgutes abhängt. Das bedeutet, je breiter die Planken, umso höher der Schüttgutkegel und umso größer die nach dem Stillsetzen des Förderrostes auf diesem verbleibende Schüttgutmenge, die dann gelegentlich von Hand oder mittels gesonderter Gerätschaften entfernt werden muss.

Fig. 2 zeigt schematisch einen Teil-Querschnitt durch einen Rostboden gemäß der vorliegenden Erfindung, bei welchem die einander zugewandten Seitenkanten bzw. Seitenkantenbereiche zweier nebeneinander angeordneter Planken 12 jeweils zwei zueinander komplementäre, ineinandergreifende Profile bilden, zwischen denen ein Bewegungsspalt 14 gebildet ist. Wie insbesondere Fig. 3 erkennen lässt, sind die Bewegungsspalte 14 jeweils siphonartig gekrümmt und weisen, von unten nach oben, einen aufwärts gerichteten Eintrittsabschnitt 16, einen daran anschließenden abwärts gerichteten Zwischenabschnitt 18 und einen daran anschließenden aufwärts gerichteten Austrittsabschnitt 20 auf.

Wie ebenfalls insbesondere die Fig. 3 erkennen lässt, treten die Bewegungsspalte 14 in einem spitzen Winkel α schräg zu Rostbodenoberfläche 22 aus. Der Austrittswinkel α der Bewegungsspalte 14 ist so gewählt, dass sich die austretende Kühlluft infolge des Coanda-Effektes an die Rostbodenoberfläche 22 anlegt.

Die Breite der Bewegungsspalte 14 ist so ausgelegt und mit der Breite der Planken 12 abgestimmt, dass die Bewegungsspalte bei einer Wärmedehnung der Planken in Querrichtung sich auf jeden Fall nicht schließen und darüber hinaus innerhalb eines durch Regelung der Kühlluftventilatoren kompensierbaren Bereiches bleiben. Ausgehend von einer durch die noch sicher ausblasbare Korngröße des Schüttgutes bestimmten Spaltbreite im Austrittsabschnitt 20 von 1-3 mm, hier beispielsweise etwa 2 mm, und unter der Voraussetzung, dass die gesamte Kühlluftmenge durch die Bewegungsspalte ausgeblasen wird, ergibt sich bei einer angestrebten offenen Rostfläche von 2,5 % eine Plankenbreite von etwa 80 mm. Diese hier beispielhaft angegebenen Relationen ändern sich natürlich, wenn ein zunehmender Anteil der Kühlluft durch in den Planken ausgebildete Blasöffnungen ausgeblasen wird, d.h., aus belüftungstechnischer Sicht werden die Planken breiter. Aus fördertechnischer Sicht ist dies nachteilig, weil die Schüttgutkegel höher werden.

Es lässt sich zeigen, dass ein Bewegungsspalt mit einer Spaltbreite von 3 mm im kalten Zustand des Rostes bei einem Austrittswinkel α von 35° bei einer Erwärmung um 500°C auf 2,4 mm verengt wird. Die erforderliche Druckerhöhung am Eingang der Spalte ist in einer Größenordnung, welche im üblichen Regelbereich der Kühlluftventilatoren liegt.

Wie die Fig. 2 weiter erkennen lässt, kann die wirksame Breite B der Planken 12 wesentlich schmaler gehalten werden als im Beispiel der Fig. 1, so dass auch die Höhe H der Schüttgutkegel und damit die nach dem Stillsetzen des Förderrostes verbleibende Schüttgutmenge erheblich kleiner ist; außerdem fallen Schüttgutkegel über den Bewegungsspalten fort, da diese ständig vollständig freigeblasen werden. Wie ein Vergleich der Fig. 1 und 2 zeigt, beträgt bei einer dreifachen wirksamen Breite 3B der herkömmlichen Planken 2, 4, 6 gegenüber den Planken 12 die auf diesen verbleibende Schüttgutmenge theoretisch das Neunfache.

Versuche mit verhältnismäßig ungünstig gewählten Versuchsbedingungen, d.h. mit scharfkantigem Split als Schüttgut, Seitenwänden aus Holz mit verhältnismä-βig hoher Reibung sowie metallisch glatten Planken mit verhältnismäßig geringer Reibung haben folgendes ergeben:

Als Bewegungsmuster für die Plankenbewegung wurde vorgegeben, dass sich alle Planken gleichzeitig in Förderrichtung und einzeln zurück bewegen. Es hat sich gezeigt, dass eine vollständige Förderung in Vorwärtsrichtung noch erreicht wird, wenn die Betthöhe H nicht mehr als 35 % der gesamten Bettbreite B beträgt, d.h. $H \leq 0{,}35 \cdot B$. ist. Dabei sind Wandreibung und Plankenreibung etwa gleich, das gesamte Bett wird gefördert. Bei einer Betthöhe von $H > 0{,}35 \cdot B$ wird das Bett durch Wandreibung verlangsamt.

Bei einer lüftungstechnisch zulässigen bzw. kritischen Grenz-Betthöhe von etwa 600 mm ergibt sich daraus eine Mindestbettbreite $B = H: 0{,}35 = 600 mm: 0{,}35 = 1715 mm$. In der Praxis ist die Bettbreite von Förderrosten erheblich größer, so dass ein Bett mit einer Betthöhe von 600 mm in jedem Fall problemlos vorwärts gefördert wird, da die Wandreibung erheblich geringer als die Plankenreibung ist.

Der beobachtete Zusammenhang zwischen Betthöhe und Breite der bewegten Planke gilt auch für den Rückhub. Bei einer Plankenbreite b ist in erster Näherung die zurück geförderte Betthöhe $h \approx 0{,}35b$. Bei Aufteilung der gesamten Rostbreite bzw. Bettbreite $B$ auf $n$ Planken gilt: $b = \dfrac{1}{n} B$ und daraus

$$h \approx \frac{1}{n} \cdot 0{,}35B$$

d.h. die Betthöhe beim Rückhub ist um den Faktor 1/n kleiner als bei der Förderung in Vorwärtsrichtung. Es gibt also aus fördertechnischer Sicht einen Anreiz, die Planken schmal auszuführen.

Zu der Reibung an den Seitenwänden kommt beim Rückhub noch die Reibung mit dem über und neben dem jeweils zurück geförderten Schüttgut befindlichen ruhenden Schüttgut. Diese zusätzliche Reibung verringert die zurück geförderte Schüttgutmenge weiter.

Es gibt demnach aus fördertechnischer Sicht an sich einen Anreiz, bei gegebener Plankenbreite das in Förderrichtung bewegte Schüttgutbett höher einzustellen, als es dieser Plankenbreite gemäß den oben beschriebenen Zusammenhängen entspricht. In der einschlägigen Literatur sind mehr als 800 mm Betthöhe bei einer Plankenbreite von 600 mm bekannt geworden (Cement International No. 2/2000: Operating Experiences with the Claudius Peters etaclinker cooler in the Siggenthal works of Holcim Switzerland). Aus belüftungstechnischer Sicht hat sich bei anderen Rostböden jedoch eine Betthöhe von 600 mm als günstig erwiesen, wie oben erwähnt. Für diese Betthöhe wären Plankenbreiten von weniger als 600 mm erforderlich und unter Einbeziehung weiterer Faktoren von deutlich weniger als 600 mm wünschenswert.

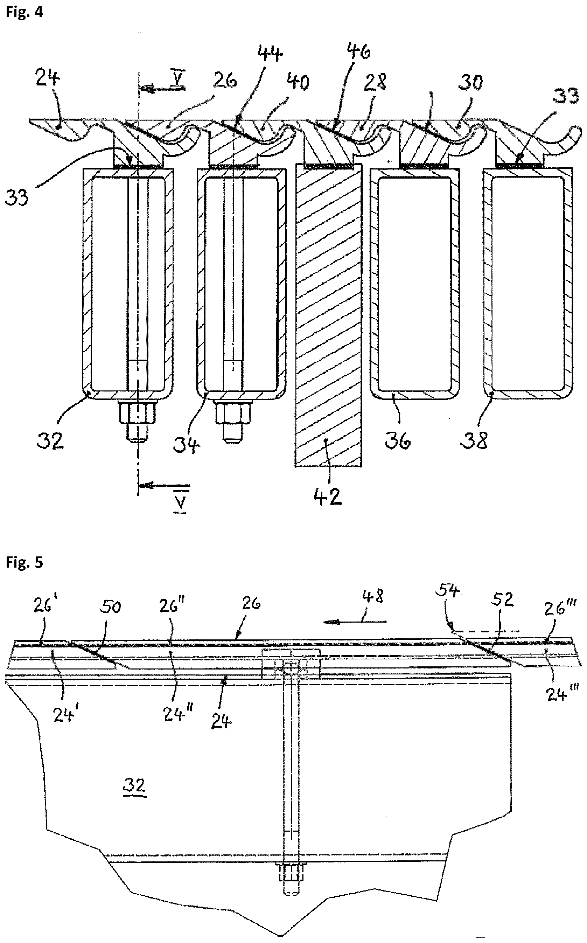

Fig. 4 zeigt einen Teil-Querschnitt durch einen Förderrost, bei welchem jede bewegte Planke 24, 26, 28, 30 auf einem diese auf ihrer ganze Länge unterstützenden Längsträger 32, 34, 36 bzw. 38 befestigt ist. Die Längsträger sind in hier nicht näher dargestellter Weise mit einer Antriebseinrichtung für die Längsbewegung der Planken verbunden.

Die in Fig. 4 mittlere Planke 40 stellt eine feststehende Planke dar, die mit der Rostbodenstruktur 42 fest verbunden ist. Wie die Fig. 4 erkennen lässt, ist zwischen der feststehenden Planke 40 und den neben dieser angeordneten bewegten Planken 26 bzw. 28 auch jeweils ein Bewegungsspalt 44 bzw. 46 ausgebildet.

Fig. 5 zeigt einen Längsschnitt entlang der Schnittlinie V-V in Fig. 4. Dabei ist zu erkennen, dass die Planken 24 bzw. 26 jeweils aus Plankenabschnitten 24', 24", 24''' bzw. 26', 26", 26''' zusammengesetzt sind. Die Plankenabschnitte sind auf nicht näher dargestellte Weise miteinander verbunden und über in Fig. 4 mit 33 bezeichnete wärmeisolierende Elemente mit den diese unterstützenden Tragstrukturen verbunden. Die Plankenabschnitte stoßen über von unten nach oben schräg nach vorne, d.h. in der Förderrichtung 48 ausgerichtete Stoßfugen 50 bzw. 52 aneinander. Die Verbindung der Plankenabschnitte ist konstruktiv so gestaltet, dass sie sich an den Stoßfugen 50, 52 gegeneinander verschieben können. Dabei bildet der jeweils hintere Plankenabschnitt, beispielsweise 24''', gegenüber dem davor liegenden Plankenabschnitt 24" eine Stufe 54, die nicht schädlich ist, sondern vielmehr bei der Vorschubbewegung eine Mitnahme des Schüttgutes bewirkt und beim Rückhub zumindest die untere Schicht des Schüttgutes einer kleinen Fallbewegung aussetzt, die sich im Schüttgutbett fortpflanzt und dabei die Kornsortierung durch Austragen des mittels Belüftung bewegbaren Feinkorns unterstützt.

Wie weiter vorne bereits erläutert wurde, wird über die Bewegungsspalte 14 zumindest eine Kühlluftmenge ausgeblasen, die ausreicht, diese vollständig frei zu blasen. Vorzugsweise wird der überwiegende bis gesamte Anteil der vorgesehenen Kühlluftmenge durch die Bewegungsspalte geführt.

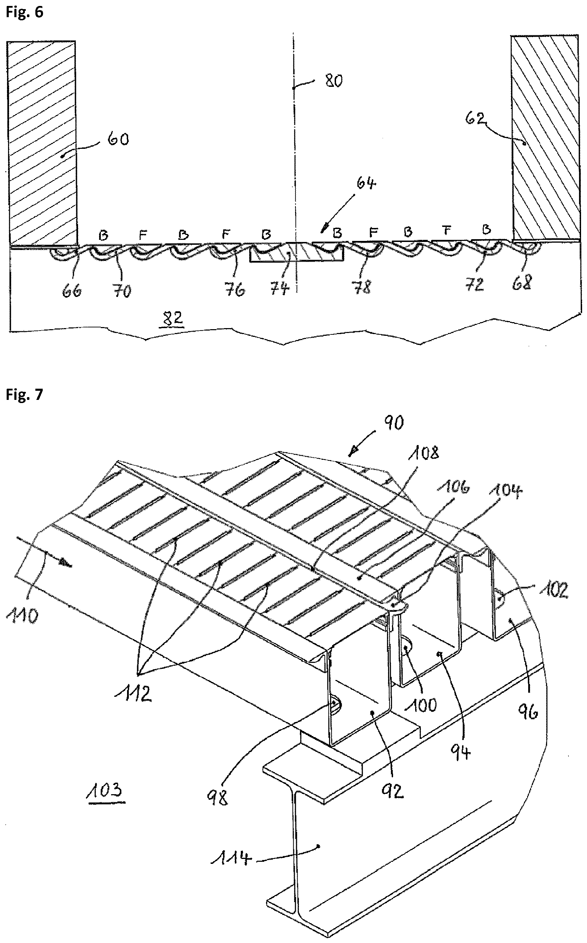

Fig. 6 zeigt einen schematisierten Querschnitt durch einen zwischen zwei festen Seitenwänden 60, 62 angeordneten Rostboden 64. Jeder der Seitenwände 60 bzw. 62 ist eine damit fest verbundene, dieser gegenüber abgedichtete Randplanke 66 bzw. 68 zugeordnet, die mit der jeweils zur Rostbodenmitte hin anschließenden Planke 70 bzw. 72 einen Bewegungsspalt bildet. Diese Planken 70 bzw. 72 sind z.B. längsbewegliche Planken, an die sich zur Rostbodenmitte hin beispielsweise bewegliche Planken B und feste Planken F anschließen, die miteinander ebenfalls Bewegungsspalte bilden, wie schon beschrieben wurde. In der Rostbodenmitte ist eine feste Mittelplanke 74 angeordnet, die mit der jeweils benachbarten inneren, beweglichen Planke 76 bzw. 78 ebenfalls einen Bewegungsspalt bildet.

Wie die Fig. 6 erkennen lässt, sind die Bewegungsspalte der in der Fig. 6 rechten Rostbodenseite einerseits und der linken Rostbodenseite andererseits jeweils zur Mittelebene 80 hin gerichtet, wie bereits beschrieben wurde.

Die Fig. 6 zeigt ein Beispiel für einen Förderrost, bei welchem die gesamte Kühlluft durch die mit dem unter dem Rostboden befindlichen Luftkasten 82 in Verbindung stehenden Bewegungsspalte ausgeblasen wird, wobei die offene Rostfläche durch das Verhältnis der Spaltfläche zur Gesamtfläche des Rostbodens bestimmt ist, wie ebenfalls bereits beschrieben wurde.

Fig. 7 zeigt ein Beispiel für einen Rostboden 90, bei welchem die relativ zueinander beweglichen Planken 92, 94, 96 jeweils als langgestreckte Kästen ausgebildet sind, die über im Boden vorgesehene Öffnungen 98, 100, 102 mit einem unterhalb des Rostbodens befindlichen Luftkasten bzw. einer Luftkammer 103 in Verbindung stehen. An den einander zugewandten oberen Seitenkanten der Kästen sind zueinander komplementäre, ineinandergreifende Profile 104, 106 angeordnet, zwischen denen ein Bewegungsspalt 108 ausgebildet ist. Über die Bewegungsspalte wird ein vorgegebener, definierter Anteil der Kühlluft ausgeblasen.

Zusätzlich zu den als Blasöffnungen dienenden Bewegungsspalten 108 sind an der Oberseite der Kästen jeweils quer zu der durch den Pfeil 110 dargestellten Förderrichtung verlaufende Blasschlitze 112 etwa gemäß der vorne genannten EP 0 549 816 B2 vorgesehen, über die der verbleibende Anteil der Kühlluft ausgeblasen wird.

Fig. 7 zeigt außerdem ein Beispiel, bei welchem die in diesem Fall als biegesteife Kästen ausgebildeten Planken 92-96 auf Querträgern gelagert sind, von denen ein Querträger 114 dargestellt ist.

**Bezugszeichenliste**

| | |
|---|---|
| 2 | Planke |
| 4 | Planke |
| 6 | Planke |
| 8 | Bewegungsspalte |
| 10 | Bewegungsspalte |
| 12 | Planke |
| 14 | Bewegungsspalt |
| 16 | Eintrittsabschnitt |
| 18 | Zwischenabschnitt |
| 20 | Austrittsabschnitt |
| 22 | Rostbodenoberfläche |
| $\alpha$ | Austrittswinkel $\alpha$ |
| 24 | Planke |
| 26 | Planke |
| 28 | Planke |
| 30 | Planke |
| 32 | Längsträger |
| 34 | Längsträger |
| 36 | Längsträger |
| 38 | Längsträger |
| 40 | Planke |
| 42 | Rostbodenstruktur/Längsträger |
| 44 | Bewegungsspalt |
| 46 | Bewegungsspalt |
| 24' | Plankenabschnitt |
| 24" | Plankenabschnitt |
| 24''' | Plankenabschnitt |
| 26' | Plankenabschnitt |
| 26" | Plankenabschnitt |
| 26''' | Plankenabschnitt |
| 33 | wärmeisolierende Elemente |
| 48 | Förderrichtung |
| 50 | Stoßfuge |
| 52 | Stoßfuge |
| 54 | Stufe |
| 60 | Seitenwand |
| 62 | Seitenwand |
| 64 | Rostboden |
| 66 | Randplanke |
| 68 | Randplanke |
| 70 | Planke |
| 72 | Planke |
| 74 | Mittelplanke |
| 76 | Planke |
| 78 | Planke |
| 80 | Mittelebene |
| 82 | Luftkasten |
| 90 | Rostboden |
| 92 | Planke |
| 94 | Planke |
| 96 | Planke |
| 98 | Öffnung |
| 100 | Öffnung |
| 102 | Öffnung |
| 103 | Luftkammer |
| 104 | Profil |
| 106 | Profil |
| 108 | Bewegungsspalt |
| 110 | Förderrichtung |
| 112 | Blasschlitze |
| 114 | Querträger |

**Patentansprüche**

1. Förderrost zum Fördern und Kühlen von Schüttgut, umfassend einen Rostboden mit mehreren quer zur Förderrichtung nebeneinander auf einer zugeordneten Tragstruktur angeordneten, relativ zueinander einzeln oder in Gruppen betriebsmäßig längs bewegten Planken mit dazwischen liegenden, einen Kühlluftdurchtritt erlaubenden Bewegungsspalten (14), wobei die einander zugewandten Seitenkanten bzw. Seitenkantenbereiche zweier nebeneinander angeordneter Planken (12) Profile bilden, zwischen denen der Bewegungsspalt (14) ausgebildet ist, **dadurch gekennzeichnet, dass** die Seitenkantenbereiche benachbarter Planken zueinander komplementäre Profile bilden und dass die Planken (24, 26) aus mehreren in Längsrichtung hintereinander angeordneten und miteinander verbundenen Plankenabschnitten (24', 24", 24"'; 26', 26", 26"') zusammengesetzt sind.

2. Förderrost nach Anspruch 1, **dadurch gekennzeichnet, dass** die Bewegungsspalte (14) jeweils siphonartig gekrümmt mit zumindest einem aufwärts gerichteten Eintrittsabschnitt (16), einem daran anschließenden abwärts gerichteten Zwischenabschnitt (18) und einem daran anschließenden aufwärts gerichteten Austrittsabschnitt (20) ausgebildet sind.

3. Förderrost nach Anspruch 1 oder 2, **dadurch gekennzeichnet, dass** die Bewegungsspalte (14) in einem spitzen Winkel α schräg zur Rostbodenoberfläche (22) austreten.

4. Förderrost nach Anspruch 3, **dadurch gekennzeichnet, dass** der Austrittswinkel α der Bewegungsspalte (14) so gewählt ist, dass sich die austretende Kühlluft infolge des Coanda-Effektes an die Rostbodenoberfläche (22) anlegt.

5. Förderrost nach einem der Ansprüche 1 bis 4, **dadurch gekennzeichnet, dass** die Austrittsrichtung der Bewegungsspalte (14) vom Rostbodenrand zur Rostbodenmitte hin verläuft.

6. Förderrost nach einem der Ansprüche 1 bis 5, **dadurch gekennzeichnet, dass** die Breite der Bewegungsspalte (14) so gewählt und mit der Breite der Planken abgestimmt ist, dass die bei einer Wärmedehnung der Planken (12) in Querrichtung auftretende Verengung durch Leistungserhöhung von Kühlluftventilatoren kompensierbar bleibt.

7. Förderrost nach einem der Ansprüche 1 bis 6, **dadurch gekennzeichnet, dass** jede Planke (24 bis 30; 40) auf einem diese auf ihrer ganzen Länge unterstützenden Längsträger (32 bis 38; 42) befestigt ist.

8. Förderrost nach einem der Ansprüche 1 bis 7, **dadurch gekennzeichnet, dass** die Planken (92-96) auf mehreren in Längsrichtung hintereinander angeordneten Querträgern (114) gelagert sind.

9. Förderrost nach einem der Ansprüche 1 bis 8, **dadurch gekennzeichnet, dass** die Plankenabschnitte über von unten nach oben und schräg nach vorne ausgerichtete Stoßfugen (52) aneinander stoßen.

10. Förderrost nach einem der Ansprüche 1 bis 9, **dadurch gekennzeichnet, dass** die Planken (24 bis 30) über wärmeisolierende Isolierelemente mit den diese unterstützenden Tragstrukturen (Längsträger 32 bis 38) verbunden sind.

11. Förderrost nach einem der Ansprüche 1 bis 10, **dadurch gekennzeichnet, dass** die die Planken unterstützenden beweglichen Tragstrukturen mittels verschleißfreier Linearführungen nach dem Prinzip der Pendelfederstäbe gelagert sind.

12. Verfahren zum Kühlen einer auf einem Förderrost liegenden Schüttgutschicht mittels durch den Rostboden ausgeblasener Kühlluft, wobei der Rostboden aus mehreren quer zur Förderrichtung nebeneinander angeordneten, betriebsmäßig relativ zueinander längs bewegten Planken mit dazwischen liegenden Bewegungsspalten (14) gebildet wird, wozu die Planken (24, 26) aus mehreren in Längsrichtung hintereinander angeordneten und miteinander verbundenen Plankenabschnitten (24', 24", 24"'; 26', 26", 26"') zusammengesetzt werden und wobei durch die Bewegungsspalte (14) zumindest eine Kühlluftmenge ausgeblasen wird, die ausreicht, die Bewegungsspalte (14) vollständig frei zu blasen.

13. Verfahren nach Anspruch 12, **dadurch gekennzeichnet, dass** der überwiegende Teil der insgesamt vorgesehenen Kühlluftmenge durch die Bewegungsspalte (14) ausgeblasen wird.

14. Verfahren nach Anspruch 13, **dadurch gekennzeichnet, dass** die durch die Bewegungsspalte (14) geführte Kühlluft in einem spitzen Winkel α schräg zur Rostbodenoberfläche (22) ausgeblasen wird.

15. Verfahren nach Anspruch 14, **dadurch gekennzeichnet, dass** die Kühlluft aus jedem Bewegungsspalt (14) jeweils zur Rostbodenmitte hin ausgeblasen wird.

**Claims**

1. Conveyor grate for conveying and cooling bulk material, comprising a grate floor with a plurality of planks being arranged adjacently to each other and transversely to the conveying direction on an associated support structure, being operationally moved relative to each other solely or in groups and in longitudinal direction, with moving gaps (14) in between allowing a passage of cooling air, wherein the mutually facing side edges or side edge regions of two juxtaposed planks (12) form profiles, between which the moving gap (14) is formed, **characterized in that** the side edge regions of juxtaposed planks (12) form mutually complementary profiles and that the planks (24, 26) are composed of a plurality of plank portions (24', 24", 24'''; 26', 26" 26''') being arranged one behind the other in longitudinal direction and being interconnected.

2. Conveyor grate according to claim 1, **characterized in that**
the moving gaps (14) each are formed curved in a siphon-like manner with at least one upwardly directed inlet section (16), a subsequent downwardly directed intermediate portion (18) and a subsequent upwardly directed outlet portion (20),

3. Conveyor grate according to claim 1 or 2, **characterized in that** the moving gaps (14) exit at an acute angle $\alpha$ inclined to the grate floor surface (22).

4. Conveyor grate according to claim 3, **characterized in that**
the exit angle $\alpha$ of the moving gaps (14) is selected such that the exiting cooling air attaches to the grate floor surface (22) due to the Coanda-effect.

5. Conveyor grate according to one of claims 1 to 4, **characterized in that** the outlet direction of the moving gaps (14) extends from the grate floor's edge to the grate floor's center.

6. Conveyor grate according to one of claims 1 to 5, **characterized in that** the width of the moving gaps (14) is selected and aligned with the width of the planks such that, the narrowing occurring in transverse direction due to thermal expansion of the planks (12) remains compensable by an increased power setting of the cooling air fans.

7. Conveyor grate according to one of claims 1 to 6, **characterized in that** each plank (24 to 30; 40) is mounted on a longitudinal carrier (32 to 38; 42) supporting the planks over their entire length.

8. Conveyor grate according to one of claims 1 to 7, **characterized in that** the planks (92 - 96) are mounted on a plurality of transverse crossbeams (114) being arranged one behind the other in longitudinal direction.

9. Conveyor grate according to one of claims 1 to 8, **characterized in that** the plank portions abut at butt joints (52) being aligned from bottom to top and inclined in a forward direction.

10. Conveyor grate according to one of claims 1 to 9, **characterized in that** the planks (24 to 30) are connected via heat-insulating insulation elements with the support structures (longitudinal carriers 32 to 38) which support said insulation elements.

11. Conveyor grate according to one of claims 1 to 10, **characterized in that** the movable support structures supporting the planks are rested by means of wear-free linear guides according to the principle of the pendulum spring rods.

12. Method for cooling a bulk material layer lying on a grate floor by means of cooling air blown through the grate floor, wherein the grate floor comprises of a plurality of planks being juxtaposed to each other transverse to the conveying direction and being operationally moved relative to each other in longitudinal direction, with moving gaps (14) in between, where the planks (24, 26) are composed of a plurality of plank portions (24', 24", 24'''; 26', 26" 26''') being arranged one behind the other in longitudinal direction and being interconnected and wherein at least the cooling air volume being blown through the moving gaps (14) is sufficient to blow the moving gaps (14) completely free.

13. Method according to claim 12, **characterized in that** the major part of the provided overall volume of cooling air is blown through the moving gaps (14).

14. Method according to claim 13, **characterized in that** the cooling air guided through the moving gaps (14) is blown out at an acute angle $\alpha$ inclined to the grate floor surface (22).

15. Method according to claim 14, **characterized in that** the cooling air is blown out from each moving gap (14), respectively, in the direction to the grate floor's center.

## Revendications

1. Grille de transport pour le transport et le refroidissement de matière en vrac, comprenant un fond grillagé avec plusieurs planches disposées les unes à côté des autres transversalement par rapport à la direction de transport sur une structure portante associée et déplacées longitudinalement en fonctionnement les unes par rapport aux autres séparément ou en groupes, une fente de mouvement (14) permettant le passage d'air de refroidissement, les bords latéraux ou des zones de bords latéraux tournés l'un vers l'autre de deux planches (12) juxtaposées formant des profils entre lesquels est formée la fente de mouvement (14), **caractérisée en ce que** les zones de bord latéral de planches (12) voisines forment des profilés complémentaires l'un de l'autre et **en ce que** les planches (24, 26) se composent de plusieurs parties de planche (24', 24", 24'" ; 26', 26", 26'") disposées les unes à la suite des autres dans le sens longitudinal et assemblées entre elles.

2.  Grille de transport selon la revendication 1, **caractérisée en ce que** les fentes de mouvement (14) soient incurvées en forme de siphon avec au moins une partie d'entrée (16) dirigée vers le haut, une partie intermédiaire (18) dirigée vers le bas lui faisant suite et une partie de sortie (20) dirigée vers le haut lui faisant.

3.  Grille de transport selon la revendication 1 ou 2, **caractérisée en ce que** les fentes de mouvement (14) débouchant à l'oblique sous un angle aigu α par rapport à la surface du fond grillagé (22).

4.  Grille de transport selon la revendication 3, **caractérisée en ce que** l'angle de débouché α des fentes de mouvement (14) est choisi de telle façon que l'air de refroidissement sortant s'applique sur la surface du fond grillagé (22) par effet Coanda.

5.  Grille de transport selon la revendication 1 à 4, **caractérisée en ce que** le sens de débouché des fentes de mouvement (14) va du bord du fond grillagé au milieu du fond grillagé.

6.  Grille de transport selon la revendication 1 à 5, **caractérisée en ce que** la largeur des fentes de mouvement (14) est choisie et adaptée à la largeur des planches de telle manière que leur rétrécissement transversal résultant de la dilatation thermique des planches (12) reste compensé par l'augmentation de rendement des ventilateurs à air de refroidissement.

7.  Grille de transport selon la revendication 1 à 6, **caractérisée en ce que** chaque planche (24 à 30; 40) est fixée sur un support longitudinal (32 à 38; 42) qui la soutient sur toute sa longueur.

8.  Grille de transport selon la revendication 1 à 7, **caractérisée en ce que** les planches (92-96) s'appuient sur plusieurs supports transversaux (114) disposés les uns à la suite des autres dans le sens longitudinal.

9.  Grille de transport selon la revendication 1 à 8, **caractérisée en ce que** les parties de planche butent les unes sur les autres par l'intermédiaire de joints bout à bout (52) orientés de bas en haut et à l'oblique vers l'avant.

10.  Grille de transport selon la revendication 1 à 9, **caractérisée en ce que** les planches (24 à 30) sont reliées par des éléments isolants thermiques aux structures portantes (supports longitudinaux 32 à 38) qui les supportent.

11.  Grille de transport selon la revendication 1 à 10, **caractérisée en ce que** les structures portantes mobiles qui supportent les planches sont soutenues au moyen de guides linéaires suivant le principe des barres de ressort oscillantes.

12.  Procédé pour refroidir une couche de matière en vrac reposant sur une grille de transport au moyen d'air de refroidissement soufflé à travers le fond grillagé, dans lequel le fond grillagé se compose de plusieurs planches disposées les unes à côté des autres transversalement par rapport à la direction de transport et déplacées longitudinalement en fonctionnement les unes par rapport aux autres entre lesquelles sont formés des fentes de mouvement (14), en composant les planches (24, 26) de plusieurs parties de planche (24', 24", 24'"; 26', 26", 26'") disposées les unes à la suite des autres dans le sens longitudinal et assemblées entre elles ainsi qu'une quantité d'air de refroidissement suffisante pour dégager complètement les fentes de mouvement (14), au minimum, est soufflée à travers les fentes de mouvement (14).

13.  Procédé selon la revendication 12, **caractérisé en ce que** la majeure partie de la quantité d'air de refroidissement totale prévue est soufflée à travers les fentes de mouvement (14).

14.  Procédé selon la revendication 13, **caractérisé en ce que** l'air de refroidissement acheminé à travers les fentes de mouvement (14) est soufflé à l'oblique sous un angle aigu α par rapport à la surface du fond grillagé (22).

15.  Procédé selon la revendication 14, **caractérisé en ce que** l'air de refroidissement est soufflé à partir de chaque fente de mouvement (14) vers le milieu du fond grillagé.

EP 3 252 413 B1

**Fig. 1**

3xH

2

8

4

10

6

3xB

**Fig. 2**

14

14

H

B

12

12

**Fig. 3**

12

12

12

14

22

α

16   18   20

11

**Fig. 4**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1475594 A1
- DK 199901403
- EP 0167658 A

- EP 0549816 B2
- DE 10118440
- EP 0176658 A

**In der Beschreibung aufgeführte Nicht-Patentliteratur**

- **KARL VON WEDEL.** Zement, Kalk, Gips. *Zeitschrift,* April 1992, 171 ff